# EUROPÄISCHE PATENTSCHRIFT

(11) **EP 1 448 334 B1**
(45) Veröffentlichungstag und Bekanntmachung des Hinweises auf die Patenterteilung: **20.04.2011**
(21) Anmeldenummer: 02774233.7
(22) Anmeldetag: 14.11.2002
(51) Int. Cl.: B23K 9/127, G01B 11/30

(54) **Verfahren und Vorrichtung zur Erfassung der Nahtqualität einer Schweißnaht bei der Schweißung von Werkstücken**
Method and device for detecting the quality of a welding seam during the welding of workpieces
Procédé et dispositif de détection de la qualité d'un joint de soudure durant le soudage de pièces

(30) Priorität: 15.11.2001 CH 210101
(43) Veröffentlichungstag der Anmeldung: 25.08.2004
(73) Patentinhaber: Precitec Vision GmbH & Co. KG, 65760 Eschborn (DE)
(72) Erfinder: SCHWARZ, Joachim, CH-8450 Andelfingen (CH); HALSCHKA, Martin, 78224 Singen-Friedingen (DE)
(74) Vertreter: Wagner, Bernhard Peter
(86) Internationale Anmeldenummer: PCT/CH2002/000613
(87) Internationale Veröffentlichungsnummer: WO 2003/041902

(56) Entgegenhaltungen:
- DE-A- 4 312 241
- DE-A- 4 408 226
- US-A- 4 591 689
- US-A- 5 887 122

## Beschreibung

### Technisches Gebiet

Die Erfindung betrifft ein Verfahren gemäss Oberbegriff des Anspruchs 1 sowie eine Vorrichtung gemäss Oberbegriff des Anspruchs 10.

### Stand der Technik

Beim Zusammenfügen von Materialien, insbesondere durch Schweissung, aber auch Klebung, ergibt sich das Problem die Fügestelle zu erfassen. Dies sowohl bei punktförmigen Fügestellen (Punktschweissungen, Punktklebungen) als auch bei linienförmigen Fügestellen (Schweissnaht, Kleberraupe). Es kann sich dabei um eine Erfassung sowohl vor dem Fügeschritt als auch danach handeln, wobei unter Erfassung vorliegend einerseits die Erkennung der Lage und andererseits der Beschaffenheit bzw. Qualität der Fügestelle verstanden wird. So benötigen Schweissverfahren mit kleiner Wärmeeinflusszone (Strahlschweissen, insbesondere Laserstrahlschweissen), bei welchen die zusammenzufügenden Teile stumpf aneinanderstossen, ein Nahtführungssystem zur Erfassung der Lage der Fügestelle, um den Strahl beim Schweissen exakt der Trennlinie zwischen den Werkstückteilen folgen zu lassen. Besonders beim Schweissen von stumpf aneinandergrenzenden Blechen zu sogenannten Platinen oder tailored blanks ist eine sehr präzise Strahlführung notwendig, die auch bei exakt geschnittenen Platinenteilen, d.h. sehr geringem Spalt oder sogar geschlossenem Spalt zwischen den Werkstücken die Trennlinie erkennt. Dies sollte auch gewährleistet sein, wenn Blechteile gleicher Dicke miteinander verschweisst werden, so dass an der Trennlinie kein Dikkensprung auftritt, wie dies der Fall ist, wenn Bleche unterschiedlicher Dicke zusammengefügt werden. Es sollten ferner andererseits Kantenbeschädigungen der Teile erkannt werden, da eine qualitativ hochwertige Schweissnaht bei beschädigten Kanten nicht mehr möglich ist.

Auch eine Bewertung der Fügestelle nach dem Fügeschritt, z.B. einer Schweissnaht auf deren Güte bzw. auf das Vorliegen von Schweissfehlern ist nach dem Fügen durchzuführen. Lasergeschweisste Platinen, die zu Formteilen verformt werden, und auch Rohre, insbesondere zur Innenhochdruckumformung vorgesehene Rohre aus Blechteilen, sogenannte tailored tubes, sollten einer 100 %igen Kontrolle der Schweissnaht unterzogen werden.

Die hohen Schweissgeschwindigkeiten und die Umgebungsbedingungen führen zum Einsatz von berührungslosen Erfassungseinrichtungen. Diese müssen die Kanten der zu schweissenden Platinen auch unter obigen Bedingungen zuverlässig erkennen, sowie den Kantenversatz und die Kantenqualität der Platinen überwachen; ferner müssen sie die geometrischen Daten wie Konvexität, Konkavität und Kantenversatz messen, um die Einhaltung der ISO Grenzwerte zu gewährleisten. Neben den geometrischen Daten sollen aber auch lokale Fehlstellen wie Porosität, kleine Löcher und fehlende Durchschweissungen gefunden werden, um die Qualität der Nähte sicherzustellen.

Zum Erkennen der Kanten bei der Lageerfassung ist es üblich, das sogenannte Lichtschnittverfahren anzuwenden, wobei ein Lichtstrahl, z.B. ein Laserstrahl, über die Fügelinie gelegt und dessen Versatz oder Richtungsänderung detektiert wird. In VDI Berichte Nr. 1572, 2000, P. Dillinger, A. Horn, K.-H. Noffz, Hochgeschwindigkeits-Geometrieerfassung beim Laserschweissen mittels FPGA Prozessoren, wird eine Laserlinie über eine Schweissnaht gelegt und mittels einer CMOS Kamera erfasst. Um Lichtschnitte in geringem Abstand zu legen und auszuwerten wird mit einer Bildwiederholrate von 500 Hz gearbeitet. Eine optische Kontrolle der Messfenster für die Laserlinien erfolgt mit einem Grauwertbild in Auflichtbeleuchtung, das aber nur streifenweise erzeugt wird und daher eine Bildwiederholrate von lediglich 16 Hz aufweist und, wie gesagt, nur zur Kontrolle des Lichtschnittprozesses dient.

Bei einem kommerziell erhältlichen Sensorsystem zur Erkennung der Trennlinie stumpf aneinanderstossender Teile vor der Schweissstelle (TRUMPF-Nahtsensorik TNS, Fa. TRUMPF Lasertechnik GmbH) wird ein Lichtschnittprojektor und eine CCD-Kamera verwendet, wobei ebenfalls ein Videobild mit Auflichtbeleuchtung aufgenommen wird. Das Videobild wird nach Helligkeitssignal und dessen Ableitung ausgewertet, um die Position des Stumpfstosses zu ermitteln, was auch mit dem Lichtschnittverfahren erfolgen kann. Bei matten Werkstückoberflächen wird auch eine überlagerung von Auflichtbeleuchtung und Lichtschnittprojektion vorgeschlagen, so dass durch Grauwertbildauswertung die seitliche Position des Stumpfstosses und mittels Lichtschnittauswertung der Höhenversatz ermittelt werden kann. In DE-A-43 12 241 wird ebenfalls eine Lageerkennung mit Lichtschnittverfahren und Graubildauswertung eines mittels zweidimensionalem CCD-Array aufgenommenen Bildes beschrieben, wobei Lichtschnitt- und Graubildauswertung intermittierend erfolgen. Auch bei der Erfassung der Fügestelle nach dem Fügeschritt, also z.B. der Schweissnaht, ist es bekannt, das Lichtschnittverfahren anzuwenden.

Die DE 43 12 241 A1 beschreibt ein Verfahren und eine Vorrichtung zur Erfassung der Lage einer Naht, bei dem bzw. der ein Lichtschnittverfahren und eine Graubildauswertung derart kombiniert werden, dass beide in alternierender Weise zur Anwendung kommen, wobei jeweils unterschiedliche Teilinformationen gewonnen werden. Zur Bildaufnahme wird dabei als flächenhafter Bildaufnehmer ein zweidimensionales CCD-Array verwendet. Die Lichtschnittauswertung dient zur Erfassung der Lage der Werkstückoberfläche bezüglich eines Referenzkoordinatensystems, während die Graubildauswertung zur Erfassung der Lage der Naht zur Nahtverfolgung dient.

Die DE 44 08 226 A1 beschreibt eine Messeinrichtung zur prozessgekoppelten Bestimmung der Rauheit technischer Oberflächen durch Auswertung di- oder polychromatischer Specklemuster. Hierin wird eine raue Oberfläche mit einer teilkohärenten Lichtquelle durch einen Strahlteiler hindurch beleuchtet, wobei das reflektierte Licht mittels einer Konvexlinse auf ein Detektorarray projiziert wird. Die Bilddaten werden pixelsynchron mittels einer Bilddatenerfassungseinheit als Grauwerte abgelegt und einem Digitalrechner zur weiteren Verarbeitung zur Verfügung gestellt. Auf einem Monitor kann das Specklemuster beobachtet und dadurch der Messaufbau justiert werden. Durch die Auswertung des reflektierten Specklemusters können Oberflächenparameter der rauen Oberfläche, wie ein quadratischer Mittenrauwert oder eine Vorzugsrichtung der Rauheit, wie dies für geschliffene Oberflächen der Fall ist, ermittelt werden.

Die US 5.887,122 A beschreibt ein Zielverfolgungssteuerungsverfahren für einen Roboter mit einer Pendelbewegung. Hierin umfasst ein Detektor einen Laser-Oszillator, einen schwingfähigen Spiegel, durch welchen eine Scan-Bewegung des Laserstrahls auf einem Werkstück erzeugt wird, ein optisches System zum Aufnehmen des von dem Werkstück reflektierten Lichts und ein Lichtaufnahmeelement, auf welches das reflektierte Licht durch das optische System projiziert wird. Das Lichtaufnahmeelement ist mit einem Signaldetektor verbunden, der wiederum mit einer Eingabe-/Ausgabe-Vorrichtung verbunden ist. Die Eingabe-/Ausgabe-Vorrichtung ist weiter mit einem Lasertreiber und einem Spiegelscanner verbunden. Die Daten des Signaldetektors werden über eine Steuerleitung an eine Robotersteuerung übertragen, welche das empfangene Signal des Signaldetektors auswertet, um einen Schweißroboter zu steuern.

Die US 4,591,689 A beschreibt eine adaptive Schweißführungsvorrichtung. Hierin wird mittels eines Projektors ein Laserstrahl auf ein Werkstück projiziert und von einer Kamera aufgenommen. Der Projektor ist dabei so ausgestaltet, dass er eine Lichtlinie auf das Werkstück projiziert, die senkrecht zu einer zu fügenden Stelle mit einer vorbestimmten Geschwindigkeit hin und her läuft, um die Lage des Zentrums, die Lage der linken Kante, die Lage der rechten Kante, die Höhe der linken Kante, die Höhe der rechten Kante, die Tiefe und die Fläche der zu fügenden Stelle zu bestimmen.

Die DE 102 22 786 A1 beschreibt ein Verfahren zur Positionierung von Werkstücken bei Laserbearbeitungsprozessen. Hierin wird mit einer Kamera ein Bild eines Werkstücks direkt erfasst und aus diesem Bild mittels einer nachgeschalteten Bildverarbeitungsanlage die Position des Werkstücks bestimmt. Diese Ist-Position wird mit einer vorgegebenen Soll-Position verglichen und über eine Maschinensteuerung wird die Position des Werkstücks gegebenenfalls nachgeregelt, wobei hierzu die Maschinensteuerung die Linear- und Rotationsachsen der Werkstückzuführung ansteuert. Das Werkstück wird durch eine externe Beleuchtungseinheit zusätzlich beleuchtet, wobei eine geometrische Figur auf die Oberfläche des Werkstücks projiziert wird. Die vom Werkstück in die Fokusierlinse reflektierten Strahlen werden über eine weitere Linse auf den Bildsensor der logarithmischen CMOS-Kamera abgebildet. Das deformierte Bild der projizierten Figur erlaubt es, die dreidimensionale Gestalt des Werkstücks zu berechnen.

### Darstellung der Erfindung

Der Erfindung liegt zunächst die Aufgabe zugrunde ein verbessertes Verfahren zur Erfassung der Nahtqualität einer Schweißnaht zu schaffen.

Dies wird beim Verfahren der eingangs genannten Art dadurch erreicht, dass das Grauwertbild zur Beurteilung der Qualität der Schweißnaht ausgewertet wird.

Dadurch, dass neu das Grauwertbild nicht nur zur Lageerkennung herangezogen wird, sondern effektiv zur Qualitätskontrolle der Schweißnaht ausgewertet wird, ergibt sich eine verbesserte Kontrolle der Schweißnaht,

Bei der Lageerkennung kann dabei das Grauwertbild zur Erkennung von Kantenbeschädigungen und zur Vermessung der Spaltbreite ausgewertet werden. Vorzugsweise wird das Verfahren indes nach dem Fügeschritt, besonders bei der Bewertung von Schweissnähten eingesetzt. Weiter ist es bevorzugt, wenn als Sensor eine CMOS Sensoranordnung, bevorzugt ein einziger CMOS Sensor, eingesetzt wird, die bzw. der bei niedriger Beleuchtungsstärke eine im wesentlichen lineare Kennlinie und bei höheren Beleuchtungsstärken eine davon abweichende Kennlinie, bevorzugt eine gekrümmte, allenfalls logarithmische Kennlinie aufweist, was die Aufnahme des Grauwertbildes mit dessen Beleuchtung, die vorzugsweise eine Dunkelfeldbeleuchtung ist, und des Lichtmusters des Lichtschnittverfahrens durch den Sensor bzw, die Separation dieser Mildteile bei der Auswertung deutlich verbessert. Anstelle oder zusätzlich zur Aufnahme eines Grauwertbildes kann ein Farbbild aufgenommen werden, was eine zusätzliche Separation aufgrund der verschiedenen Wellenlängen der beiden Lichtquellen ermöglicht. Die Auswertung erfolgt bevorzugterweise für die Schweissnahtqualität durch Ermittlung von Texturmerkmalen der Schweissnaht aus dem Bild, z.B. durch Analyse von Konturlinien. Ein Fehlen bestimmter Merkmale wird dabei z.B. als schlechte Qualität bewertet.

Der Erfindung liegt weiter die Aufgabe zugrunde, eine Vorrichtung zur Bewertung von Schweißnähten zu schaffen.

Ferner liegt der Erfindung die Aufgabe zugrunde, die Lageerfassung der Fügestelle, insbesondere vor dem Fügeschritt, also beim Schweissen die Kantenerkennung zur Führung des Schweissstrahls zu verbessern und zu vereinfachen.

Diese Aufgabe werden durch das Verfahren gemäß Anspruch 1 sowie durch die Vorrichtung gemäß Anspruch 10 gelöst. Vorteilhafte Ausgestaltungen und Weiterbildungen der Erfindung sind in den Unteransprüchen dargelegt.

### Kurze Beschreibung der Zeichnungen

Im folgenden werden Ausführungsbeispiele der Erfindung anhand der Zeichnungen näher erläutert. Dabei zeigt
Figur 1 schematisch eine Ansicht eines Laserschweissvorganges beim Platinenschweissen;
Figur,2 die Kennlinie eines bevorzugt eingesetzten Sensors;
Figur 3 schematisch das vom Sensor aufgenommene Bild;
Figur 4 zwei verschiedene, bearbeitete Bilddarstellungen des Bildes der Schweissnaht; und
Figur 5 schematisch das Querprofil der Schweissnaht, wie es mit dem Lichtschnittverfahren ermittelbar ist.

### Bester Weg zur Ausführung der Erfindung

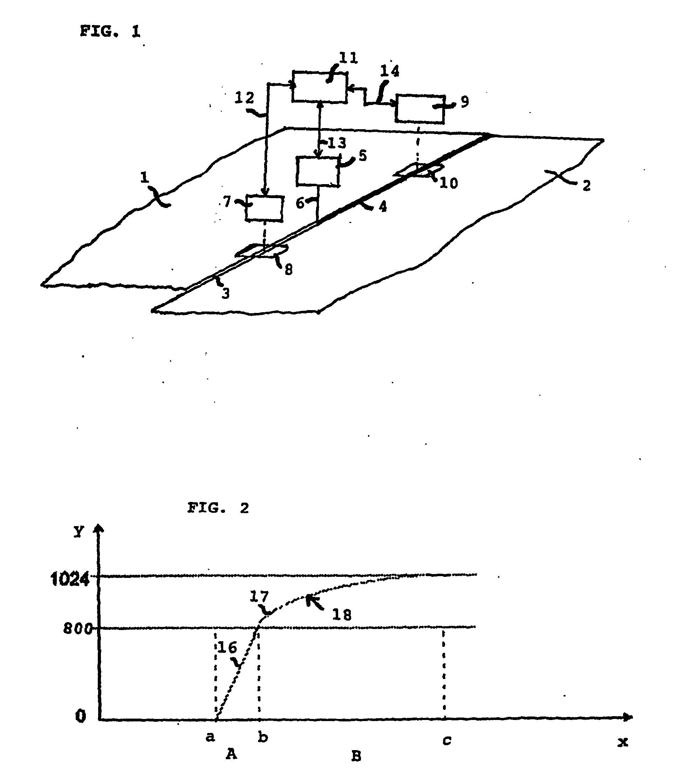

Figur 1 zeigt schematisch das Schweissen einer Platine bzw. eines Tailored Blanks, welche aus den Blechen 1 und 2 gebildet wird, welche entlang einer Fügelinie 3 stumpf aneinanderstossen. Es werden dabei in der Regel ebene Blechteile von unterschiedlicher Dicke und/oder unterschiedlichen Blecheigenschaften zu einem Element, der Platine (Tailored Blank) verbunden. Dieses Element wird in der Regel späte zu einem Bauteil umgeformt, z.B. zu einem Bauteil für ein Automobil. Ein Laserstrahl 6 aus einer Laserstrahlquelle 5 wird entlang der Fügelinie 3 geführt und verschweisst die Bleche 1 und 2 miteinander und bildet hinter sich die Schweissnaht 4. Unerheblich ist es dabei, ob die Laserstrahlquelle 5 über feststehende Werkstücke oder ob die Werkstücke an einem feststehenden Laser vorbeibewegt werden. Es ist bekannt, die Lage der Fügelinie 3 mit einer Nahterkennungseinheit 7 festzustellen, um die Laserstrahlquelle 5 bzw. den Strahl 6 exakt dem Fügelinienverlauf folgen zu lassen. In bekannter Weise wird dazu der Lauf der Fügelinie 3 mit dem Lichtschnittverfahren ermittelt, wie dies eingangs erläutert ist. Demgemäss enthält die Einheit 7 sowohl nach Stand der Technik als auch gemäss der Erfindung eine Einrichtung zur Erzeugung mindestens einer Lichtlinie, insbesondere einer Laserlichtlinie, im wesentlichen quer zum Verlauf der Fügelinie 3. Der Verlauf der Lichtlinie wird von einer Kamera erfasst, um die Fügelinie zu erkennen. Dies ist grundsätzlich bekannt und braucht hier nicht weiter erläutert zu werden. Der erfasste Bereich ist dabei in der Figur mit 8 angedeutet, wobei dies nicht massstäblich ist; der erfasste Bereich kann z.B. 8x8 mm oder 10x10 mm betragen. Weiter ist es an sich bekannt, zusätzlich ein Grauwertbild im Bereich der Lichtlinie aufzunehmen, um ebenfalls den Verlauf der Fügelinie 3 zu erkennen. Entsprechender Stand der Technik ist eingangs erwähnt worden. Das Bild der Einheit 7 wird über eine Leitung 12 an die Auswerteinheit und Steuereinheit 11 abgegeben, die auch getrennte Einheiten für Auswertung und Steuerung sein können, und entsprechend wird die Lage des Laserstrahls zur genauen Verfolgung der Fügestelle 3 gesteuert.

Zur Erfassung der Nahtqualität der Schweissnaht 4 nach der Schweissung ist es üblich, nach dem Lichtschnittverfahren zu arbeiten, um die geometrischen Daten, wie z.B. Konvexität, Konkavität und kantenversatz zu messen. Dazu ist eine Nahtprüfungseinheit 9 vorgesehen. Der von dieser erfasste Bereich ist, wiederum nicht massstäblich und z.B. ebenfalls 8x8 mm oder 10x10 mm umfassend, als Bereich 10 in der Figur angedeutet.

Gemäss der Erfindung wird nun so vorgegangen, dass, insbesondere zur Prüfung der Schweissnaht 4, sowohl das Lichtschnittverfahren eingesetzt wird als auch ein Grauwertbild aufgenommen wird, wobei das Grauwertbild zur Erkennung der Qualität der Schweissnaht ausgewertet wird. Diese Auswertung des Grauwertbildes soll insbesondere lokale Fehlstellen wie Porosität, kleine Löcher und fehlende Durchschweissungen ermitteln. Die Einheit 9 ist dazu zur Erzeugung mindestens einer Lichtlinie quer zur Schweissnaht 4 ausgestaltet. Die Lichtlinie wird dabei vorzugsweise von einem Lichtschnittlaser mit hoher optischer Leistung (z.B. von 50 mW bis 100 mW Laserdioden auf eine schmale Linie) erzeugt, um bei den vorliegenden unterschiedlichen Reflektionseigenschaften der Oberflächen immer genügend Licht auf den Sensor in der Einheit 9 zu bringen, der die Lichtlinie aufnimmt. Der Sensor in der Einheit 9 für die Lichtlinie ist dabei vorzugsweise ein CMOS-Sensor bzw. eine CMOS-Kamera. Bei Relativbewegung zwischen der zu erfassenden Fügestelle und der Einheit 9, wie das im gezeigten Beispiel von Figur 1 der Fall ist, wird die Belichtungszeit des Kamerasensors vorzugsweise so lange gewählt, dass das reflektierte Licht der Laserlinie über einen Bereich der Oberfläche gemittelt wird. Die 3D-Messung kommt so über einen Bereich zustande, der grösser ist als die Linienbreite des Lasers. ,

Für die Aufnahme des Grauwertbildes, die im wesentlichen an der selben Stelle der Naht erfolgt, an der auch die Laserlinie über die Schweissnaht gelegt wird, erfolgt eine möglichst kurze Blitzlicht-Belichtung, wobei die Belichtungszeit der Beleuchtung kurz sein soll, um die Bewegungsunschärfe der sich in diesem Beispiel relativ zur Einheit 9 bewegenden Schweissnaht kleiner als ein Pixel zu halten. Die Beleuchtung erfolgt dabei bevorzugt mit Dunkelfeldbeleuchtung, allenfalls stattdessen im Hellfeld. Vorzugsweise ist der Sensor zur Aufnahme des Grauwertbildes ebenfalls ein CMOS-Sensor und bevorzugterweise derselbe Sensor, der auch die Laserlinie aufnimmt. Bevorzugterweise wird also mittels nur eines Sensors, insbesondere eines CMOS-Sensors bzw. einer CMOS-Kamera jeweils in kurz aufeinanderfolgenden Zeiträumen ein Bild aufgenommen, welches sowohl ein Grauwertbild der Schweissnaht wie auch das Bild der Laserlinie umfasst. Der Abstand der Bildaufnahmen ist so gewählt, dass eine Überdeckung des Objektbereichs, d.h. eine lückenlose Aufnahme der Naht, gewährleistet ist.

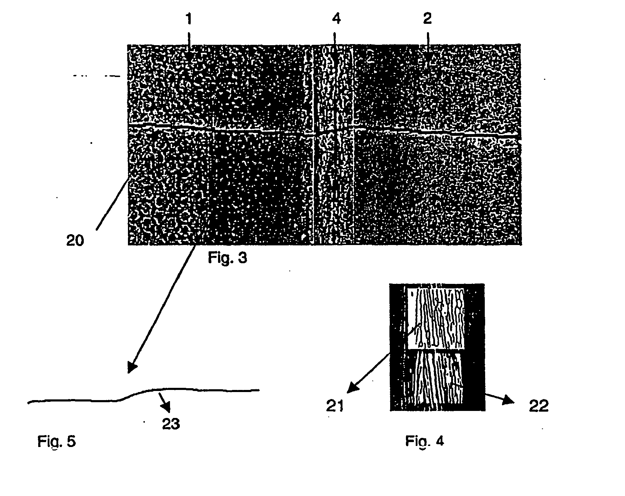

In Figur 3 ist eine entsprechende Bildaufnahme dargestellt, welche die Werkstücke 1 und 2 sowie die Schweissnaht 4 zeigt, und die Laserlinie 20. Figur 1 zeigt schematisch den Aufnahmebereich 10, welcher in der Figur vergrössert dargestellt ist, und z.B. typischerweise beim Laserschweissen von Platinen 10x10 mm oder 8x8 mm beträgt. Für eine Qualitätskontrolle bei der Platinenschweissung werden dabei z.B. 60 Bilder/Sekunde aufgenommen. Die Relativbewegung zwischen der Einheit 9 bzw. der CMOS-Kamera und der Schweissnaht 4 kann dabei z.B. 500 mm/Sekunde betragen. Damit eine gute Darstellung der Laserschnittlinie auf dem Bild und zudem eine qualitativ gute Grauwertbilddarstellung erzielbar ist, die zur Qualitätsbewertung der Naht dienen kann, was nachfolgend noch erläutert wird, ist es bevorzugt, wenn für die Aufnahme der Laserlinie und des Grauwertbildes verschiedene Sensorkennlinien vorliegen. Figur 2 zeigt eine bevorzugte Kennlinie, wobei auf der X-Achse die Stärke des auf den Sensor einfallenden Lichts dargestellt ist und auf der Y-Achse die entsprechende Antwort des Sensors bzw. das Sensorausgangssignal als Bit-Wert. In diesem Beispiel wird angenommen, dass das Sensorausgangssignal jeweils aus einem 10-Bit-Wort besteht. Es ist erkennbar, dass bei geringerer Beleuchtungsstärke im Bereich A bzw. innerhalb der Strecke a-b auf der X-Achse eine lineare Kennlinie 16 vorgesehen ist. In diesem Bereich wird vorzugsweise das Grauwertbild aufgenommen, das entsprechend eine Darstellung mit hoher Dynamik ergibt, z.B. im Sensorausgangssignalbereich einen Wert von 0-800 innerhalb des 10-Bit-Wortwertebereichs von 0 bis 1024. In einem weiteren Kennlinienbereich 17 bzw. innerhalb des Beleuchtungsstärkenbereiches B zwischen den Beleuchtungswerten b und c, ist die Sensorkennlinie nicht linear, vorzugsweise logarithmisch. Dies erlaubt die Erfassung der Laserlinie auch bei grossen Helligkeitsschwankungen bzw. Schwankungen der Reflexionseigenschaften der Werkstückoberflächen und der Schweissnaht. Im gezeigten Beispiel wird das Bild der Laserlinie im Bereich von 801-1024 des 10-Bit-Wortes vom Sensor ausgegeben. Es können zwei Sensoren vorgesehen sein, welche die entsprechenden Kennlinien 16 bzw. 17 aufweisen und in der Einheit 9 so angeordnet sind, dass sie im wesentlichen denselben Erfassungsbereich 10 betrachten. Vorzugsweise wird aber nur ein einziger Sensor verwendet, welcher eine Gesamtkennlinie 18 aufweist, die sich aus den Kennlinienabschnitten 16 und 17 zusammensetzt. Ein solcher Sensor ist von der Firma Photonfocus AG, 8853 Lachen, Schweiz, auf dem Markt unter der Typenbezeichnung MV-D1024 CL80 erhältlich. Die Kennlinie des Sensors ist also so angepasst, dass im unteren linearen Bereich der Sensor-Antwort das Streulicht der Blitzbeleuchtung für die Grauwertbilderfassung liegt, wobei es sich vorzugsweise um eine Dunkelfeldbeleuchtung handelt; im oberen Bereich liegt das reflektierte Licht des Linienlasers. Die Eigenschaften des Sensors können so ausgenutzt werden, dass beide Beleuchtungsarten kombiniert auf ein Bild abgebildet werden können. Durch die Verwendung nur eines Sensors wird der apparative Aufwand und der Aufwand für den Bediener gesenkt und ebenso der Wartungsaufwand. Auch der Platzbedarf und die Montagekosten sind deutlich geringer als bei der Montage von zwei Sensoren. Anstelle oder zusätzlich der Verwendung eines Sensors, der ein Grauwertbild aufnimmt, kann auch ein Farbsensor verwendet werden. Dadurch kann die Trennung der Darstellung im Bild der Lichtlinie des Triangulationslasers und der Dunkelfeldbeleuchtung der Naht über die Separation der Wellenlängen des Lichtes noch verbessert werden. Bevorzugterweise liegt bei der Verwendung eines Farbsensors die Dunkelfeldbeleuchtung unterhalb von 680 nm, der Linienlaser oberhalb dieser Wellenlänge.

Die vom Sensor aufgenommenen Bilder werden auf eine Bildauswerteeinheit 11 gegeben. Dort liegt z.B. ein Bild gemäss Figur 3 vor, wobei das Bild für die Auswerteeinheit 11 nicht in sichtbarer Darstellung, sondern nur als Abfolge von Zahlen vorliegen muss. Es kann dabei so vorgegangen werden, dass in der Einheit 11 mit 8-Bit-Worten gearbeitet wird. Die Separation der Grauwerte des Bildes kann dabei noch im 10-Bit-Bild erfolgen, und die Daten können nachfolgend über entsprechende Tabellen (look-up tables) in die 8-Bit-Bereiche 0-200 (für das Grauwertbild) und 200-255 (für die Laserlinie) übertragen werden.

Die Auswertung jedes Bildes erfolgt dabei für die Laserlinie auf herkömmliche Weise, wobei mittels der Laserlinie das Querprofil der Naht ermittelbar ist, welches zur Erläuterung in Figur 5 dargestellt ist. Aus diesem Querprofil sind auf bekannte Weise die geometrischen Daten der Naht, wie z.B. Konvexität, Konkavität und Kantenversatz ermittelbar. Für diese Werte bestehen ISO-Grenzwerte, deren Einhaltung so erfasst wird. Das hochwertige Grauwertbild, welches von der Einheit 9 geliefert wird, ermöglicht nun neu auch die Beurteilung der Schweissqualität aufgrund der Auswertung dieses Bildes. Dazu werden im Bildbereich, der die Naht 4 darstellt, die Konturen der Nahtstruktur hervorgehoben.

In Figur 4 ist dies für einen Nahtabschnitt gezeigt, wobei mit 22 ein Verarbeitungsschritt gezeigt ist, wo nach dynamischer Binarisierung die Nahtstruktur hervorgehoben ist. In einem weiteren Verarbeitungsschritt gemäss dem Bereich 21 wird der dynamisch binarisierte Nahtbereich skeletiert. Übrig bleiben die Konturlinien der Nahtstruktur.

Für diese Verarbeitungsschritte sind entsprechende Bildbearbeitungsprogramme bekannt. Bevorzugt wird ein bekanntes derartiges Programm der ehemaligen Firma Logical Vision, heute Coreco Imaging, St. Laurent, Quebec, Kanada, mit der Bezeichnung WiT. Verwendet wurde die Version 5.3.

Die entsprechende Bildbearbeitung erlaubt die Erkennung von lokalen Fehlstellen, z.B. Porosität und kleine Löcher und fehlende Durchschweissungen. Dies kann einerseits dadurch erfolgen, dass die so ermittelten Strukturen entsprechend den Bereichen 21 oder 22 mit bekannten Mustern von qualitativ guten Schweissnähten verglichen werden. Es kann auch zusätzlich oder stattdessen durch die Einheit 11 das Vorhandensein der Konturlinien, deren Orientierung bzw. Winkelabweichung von der Nahtlängsrichtung und/oder deren Länge geprüft werden. Auf diese Weise ist es nun möglich, die Nahtqualität aufgrund eines Grauwertbildes zu prüfen.

Bei der Aufnahme eines Farbbildes entsteht nach der Separation der Laserlinie über die Wellenlänge wieder ein Graubild. Die beschriebene Vorgehensweise zur Beurteilung der Schweissqualität bleibt gleich.

Die Erfindung ist vorstehend anhand einer Schweissnaht beim Platinenschweissen erläutert worden, ist aber nicht auf diese Anwendung beschränkt. Es kann generell die Qualität von Fügestellen auf diese Weise geprüft werden, z.B. eine Punktschweissung oder auch eine Raupe eines Klebstoffes.

Auch bei der Kantenverfolgungseinheit 7 kann die Erfindung verwendet werden. Alle anhand der Einheit 9 erläuterten Ausgestaltungen sind dabei hiermit auch für die Einheit 7 angegeben bzw. übernommen. Dabei erfolgt - besonders die Beleuchtung und die Bildaufnahme bevorzugterweise ebenfalls so wie anhand der Einheit 9 erläutert. Die Lichtlinienauswertung erlaubt dabei die Kantenerkennung und die Dickensprung-Überwachung. Die Erkennung der Kante bei Null-Spalt/Null-Dickensprung und die Vermessung der Spaltbreite geschieht bevorzugterweise über die Graubildauswertung. Auch in diesem Fall steht durch die bevorzugte Sensorausgestaltung mit linearer und logarithmischer Kennlinie und die bevorzugte Beleuchtungsart ein qualitativ sehr gutes Grauwertbild mit hoher Auflösung, grossem Objektfeld, grossem Dynamikumfang trotz hoher Objektgeschwindigkeit zur Verfügung, wie dies nach Stand der Technik nicht der Fall war. Die Einheit 7 ist dabei ebenfalls über eine Leitung 12 mit der Bildauswertung 11 verbunden, wie dies mit der Leitung 14 für die Einheit 9 der Fall ist. In diesem Fall wird entsprechende dem Zweck der Einheit 7 die Laserquelle 5 durch die Einheit 11 über die Leitung 13 so gesteuert bzw. nachgeführt, dass die Schweissung mittels des Laserstrahls exakt an der Stelle der Fügelinie 3 erfolgt.

Der Einheit 7 kann dabei aber zusätzlich zu der Lageerkennung die Erfassung von Kantenschäden ausführen, also die Beurteilung der Qualität der Fügestelle vor dem Fügeschritt ausführen, wie dies anhand der Einheit 9 erläutert worden ist. Handelt es sich bei der Fügestelle um eine Klebstoffraupe, so erfolgt ebenfalls die Lage- und Qualitätserfassung durch eine Einheit entsprechend der Einheit 7 (oder getrennt durch zwei Einheiten) vor dem Fügeschritt.

## Patentansprüche

1. Verfahren zur Erfassung der Nahtqualität einer Schweißnaht (4) bei der Schweißung von Werkstücken (1,2), bei welchem mit einem Lichtschnittverfahren mindestens eine Lichtlinie (20) zur Erfassung des dreidimensionalen Verlaufs der Schweißnaht (4) aufgenommen wird, **dadurch gekennzeichnet, dass** zusätzlich ein Grauwertbild oder ein Farbbild der Schweißnaht (4) durch einen Kamerasensor einer Nahtprüfungseinheit (9) und mit Blitzlichtbeleuchtung aufgenommen wird, und dass das Grauwertbild oder Farbbild zur Beurteilung der Qualität der Schweißnaht (4) ausgewertet wird, wobei lokale Fehlstellen der Schweißnaht (4) ermittelt werden.

2. Verfahren nach Anspruch 1, **dadurch gekennzeichnet, dass** die mindestens eine Lichtlinie (20) des Lichtschnittverfahrens und das Grauwertbild oder Farbbild zusammen auf einem Bild aufgenommen werden.

3. Verfahren nach Anspruch 1 oder 2, **dadurch gekennzeichnet, dass** die Aufnahme, welche mindestens eine Lichtlinie (20) des Lichtschnittverfahrens enthält, welche von einem Laser erzeugt wird, mittels einer nichtlinearen, logarithmischen Sensorkennlinie erfolgt, und dass die Grauwertbilderfassung oder Farbbilderfassung durch einen Sensor mit im wesentlichen linearer Kennlinie erfolgt.

4. Verfahren nach Anspruch 3, **dadurch gekennzeichnet, dass** die im wesentlichen lineare Kennlinie im Bereich geringerer Beleuchtungsstärke liegt als die nichtlineare Kennlinie.

5. Verfahren nach Anspruch 3 oder 4, **dadurch gekennzeichnet, dass** nur ein Sensor vorgesehen ist, der einen linearen und einen nichtlinearen Kennlinienabschnitt aufweist.

6. Verfahren nach einem der Ansprüche 1 bis 5, **dadurch gekennzeichnet, dass** eine Relativbewegung zwischen Werkstück (1,2) und Aufnahmeeinrichtung erfolgt und die Belichtungszeit für die mindestens eine Lichtlinie (20) so lang gewählt wird, dass das Streulicht der Lichtlinie (20) von einem Bereich der Schweißnaht (4) reflektiert wird, welcher breiter als die Lichtlinie (20) ist.

7. Verfahren nach einem der Ansprüche 1 bis 6, **dadurch gekennzeichnet, dass** eine Relativbewegung zwischen Werkstück (1,2) und Aufnahmeeinrichtung erfolgt und die Belichtungszeit für das Grauwertbild oder Farbbild mittels der Blitzbeleuchtung so kurz gewählt wird, dass die Bewegungsschärfe kleiner als ein Pixel gehalten wird.

8. Verfahren nach einem der Ansprüche 1 bis 7 **dadurch gekennzeichnet, dass** als Werkstücke (1, 2) Platinen geschweißt werden.

9. Verfahren nach einem der Ansprüche 1 bis 8, **dadurch gekennzeichnet, dass** bei der Auswertung des Grauwertbildes die Konturen der Strukturen der Schweißnaht (4) hervorgehoben und untersucht werden.

10. Vorrichtung zur Erfassung der Nahtqualität einer Schweißnaht (4) bei der Schweißung von Werkstücken (1,2), mit einer Nahtprüfungseinheit (9) mit einer Lichtlinienprojektionseinheit und einem Kamerasensor zur Aufnahme der Lichtlinie (20) und eines Bildes, sowie mit einer Bildauswerteeinheit, für die Lichtlinie (20), **dadurch gekennzeichnet, dass** eine Blitzbeleuchtungseinheit für die Aufnahme eines Grauwertbildes oder Farbbildes durch den Kamerasensor vorgesehen ist, und dass die Bildauswerteeinheit zur Erkennung von Qualitätsmerkmalen der Schweiß-naht (4) durch die Ermittlung von lokalen Fehlstellen der Schweißnaht anhand des Grauwertbildes oder Farbbildes ausgestaltet ist.

11. Vorrichtung nach Anspruch 10, **dadurch gekennzeichnet, dass** der Kamerasensor der Nahtprüfungseinheit (9) zur Aufnahme eines Bildes ausgestaltet ist, auf dem die Lichtlinie (20) und das Grauwertbild oder Farbbild zusammen erfasst sind.

12. Vorrichtung nach Anspruch 10 oder 11, **dadurch gekennzeichnet, dass** der Kamerasensor der Nahtprüfungseinheit eine nichtlineare, logarithmische Sensorkennlinie für die Lichtlinie (20) und eine im wesentlichen lineare Kennlinie für das Grauwertbild oder Farbbild aufweist.

13. Vorrichtung nach einem der Ansprüche 10 bis 12, **dadurch gekennzeichnet, dass** die Nahtprüfungseinheit (9) einen Sensor aufweist, der einen im wesentlichen linearen Kennlinienabschnitt und einen nichtlinearen Kennlinienabschnitt aufweist, wobei der im wesentlichen lineare Kennlinienabschnitt bei geringer Beleuchtungsempfindlichkeit des Sensors liegt.

14. Vorrichtung nach Anspruch 13, **dadurch gekennzeichnet, dass** die Nahtprüfungseinheit (9) nur einen Sensor aufweist, der ein CMOS-Sensor ist.

15. Vorrichtung nach einem der Ansprüche 10 bis 14, **dadurch gekennzeichnet, dass** die Bildauswerteeinheit zur Hervorhebung und Beurteilung der Konturen des Schweißnahtbereichs im Grauwertbild ausgestaltet ist.

## Claims

1. Method for detecting the seam quality of a welding seam (4) during the welding of workpieces (1, 2), in the case of which a light section method is used to record at least one light line (20) for detecting the three-dimensional course of the welding seam (4), **characterized in that** in addition a grey level image or a colour image of the welding seam (4) is recorded by a camera sensor of a seam testing unit (9) and the use of flashlight illumination, and **in that** the grey level image or colour image is evaluated to assess the quality of the welding seam (4), local defects of the welding seam (4) being determined.

2. Method according to Claim 1, **characterized in that** the at least one light line (20) of the light section method and the grey level image or colour image are recorded together on one image.

3. Method according to Claim 1 or 2, **characterized in that** the recording, which includes at least one light line (20) of the light section method which is generated by a laser, is performed by means of a nonlinear, logarithmic sensor characteristic, and **in that** the grey level image acquisition or colour image acquisition is performed by a sensor which has a substantially linear characteristic.

4. Method according to Claim 3, **characterized in that** the substantially linear characteristic lies in a lower range of illuminance than does the nonlinear characteristic.

5. Method according to Claim 3 or 4, **characterized by** the provision of only one sensor, which has a linear and a nonlinear characteristic section.

6. Method according to one of Claims 1 to 5, **characterized in that** a relative movement takes place between the workpiece (1, 2) and recording device, and the exposure time for the at least one light line (20) is selected to be so long that the scattered light of the light line (20) is reflected by an area of the welding seam (4) which is wider than the light line (20).

7. Method according to one of Claims 1 to 6, **characterized in that** a relative movement takes place between the workpiece (1, 2) and recording device, and the exposure time for the grey level image or colour image is selected by means of the flash illumination to be so short that the motion blur is kept smaller than one pixel.

8. Method according to one of Claims 1 to 7, **characterized in that** printed circuit boards are welded as the workpieces (1, 2).

9. Method according to one of Claims 1 to 8, **characterized in that** during the evaluation of the grey level image the contours of the structures of the welding seam (4) are highlighted and examined.

10. Device for detecting the seam quality of a welding seam (4) during the welding of workpieces (1, 2), comprising a seam testing unit (9) having a light line projecting unit and a camera sensor for recording the light line (20) and an image, and having an image evaluation unit for the light line (20), **characterized in that** a flash illumination unit is provided for recording a grey level image or colour image by the camera sensor, and **in that** the image evaluation unit is configured to detect quality features of the welding seam (4) by determining local defects of the welding seam with the aid of the grey level image or colour image.

11. Device according to Claim 10, **characterized in that** the camera sensor of the seam testing unit (9) is configured to record an image on which the light line (20) and the grey level image or colour image are recorded together.

12. Device according to Claim 10 or 11, **characterized in that** the camera sensor of the seam testing unit (9) has a nonlinear, logarithmic sensor characteristic for the light line (20), and a substantially linear characteristic for the grey level image or colour image.

13. Device according to one of Claims 10 to 12, **characterized in that** the seam testing unit (9) has a sensor which has a substantially linear characteristic section and a nonlinear characteristic section, the substantially linear characteristic section lying where the illumination sensitivity of the sensor is low.

14. Device according to Claim 13, **characterized in that** the seam testing unit (9) has only one sensor, which is a CMOS sensor.

15. Device according to one of Claims 10 to 14, **characterized in that** the image evaluation unit is configured to highlight and assess the contours of the welding seam area in the grey level image.

## Revendications

1. Procédé pour déterminer la qualité d'un cordon de soudure (4) lors du soudage de pièces à oeuvrer (1, 2) dans lequel, avec un procédé par coupe optique on enregistre au moins une ligne lumineuse (20) pour déterminer le tracé tridimensionnel du cordon de soudure (4), **caractérisé en ce que** l'on prend en supplément une image en valeur de gris ou une image en couleur du cordon de soudure (4) avec un capteur à caméra d'une unité de contrôle de cordon (9) et sous éclairage avec flash lumineux, et **en ce que** l'image en valeur de gris ou l'image en couleur est évaluée pour juger quant à la qualité du cordon de soudure (4), en déterminant ici des emplacements défectueux locaux du cordon de soudure (4).

2. Procédé selon la revendication 1, **caractérisé en ce que** ladite au moins une ligne lumineuse (20) du procédé par coupe optique et l'image en valeur de gris ou l'image en couleur sont prises ensemble sur une image.

3. Procédé selon la revendication 1 ou 2, **caractérisé en ce que** la prise de vue, qui contient au moins une ligne lumineuse (20) du procédé par coupe optique, ligne qui est produite par un laser, a lieu au moyen d'un capteur à courbe caractéristique non linéaire et logarithmique, et **en ce que** la détermination de l'image en valeur de gris ou la détermination de l'image en couleur a lieu par un capteur avec une courbe caractéristique essentiellement linéaire.

4. Procédé selon la revendication 3, **caractérisé en ce que** la courbe caractéristique essentiellement linéaire se trouve dans la région des intensités d'éclairage plus faibles que la courbe caractéristique non linéaire.

5. Procédé selon la revendication 3 ou 4, **caractérisé en ce que** l'on prévoit un seul capteur, qui comprend un tronçon de courbe caractéristique linéaire et un tronçon de courbe caractéristique non linéaire.

6. Procédé selon l'une des revendications 1 à 5, **caractérisé en ce qu'**il se produit un mouvement relatif entre la pièce à oeuvrer (1, 2) et le système de prise de vue, et le temps d'éclairage pour ladite au moins une ligne lumineuse (20) est choisi aussi long que la lumière diffusée par la ligne lumineuse (20) est réfléchie par une zone du cordon de soudure (4) qui est plus large que la ligne lumineuse (20).

7. Procédé selon l'une des revendications 1 à 6, **caractérisé en ce qu'**il se produit un mouvement relatif entre la pièce à oeuvrer (1, 2) et le système de prise de vue, et le temps d'éclairage pour l'image en valeur de gris ou l'image en couleur au moyen de l'éclairage à flash lumineux est choisi aussi cours que la netteté en mouvement est maintenue inférieure à 1 pixel.

8. Procédé selon l'une des revendications 1 à 7, **caractérisé en ce que** l'on soude des plaquettes à titre de pièces à oeuvrer (1, 2).

9. Procédé selon l'une des revendications 1 à 8, **caractérisé en ce que** lors de l'évaluation de l'image en valeur de gris, on met en évidence les contours des structures du cordon de soudure (4) et on les analyse.

10. Appareil pour déterminer la qualité d'un cordon de soudure (4) lors du soudage de pièces à oeuvrer (1, 2), comprenant une unité de contrôle de cordons de soudure (9) avec une unité de projection de ligne lumineuse et un détecteur à caméra pour faire une prise de vue de la ligne lumineuse (20) et d'une image, et comprenant une unité d'évaluation d'image, pour la ligne lumineuse (20), **caractérisé en ce qu'**il est prévu une unité d'éclairage à flash lumineux pour la prise de vue d'une image en valeur de gris ou d'une image en couleur par le détecteur à caméra, et **en ce que** l'unité d'évaluation d'images est conçue pour la reconnaissance de caractéristiques de qualité du cordon de soudure (4) par détermination d'emplacements défectueux locaux du cordon de soudure au moyen de l'image en valeur de gris ou de l'image en couleur.

11. Appareil selon la revendication 10, **caractérisé en ce que** le détecteur à caméra de l'unité de contrôle de cordon (9) est conçue pour la prise d'une image sur laquelle la ligne lumineuse (20) et l'image en valeur de gris ou l'image en couleur sont saisies ensemble.

12. Appareil selon la revendication 10 ou 1l, **caractérisé en ce que** le détecteur à caméra de l'unité de contrôle de cordon (9) présente un capteur à courbe caractéristique non linéaire logarithmique pour la ligne lumineuse (20), et à courbe caractéristique essentiellement linéaire pour l'image en valeur de gris ou l'image en couleur.

13. Appareil selon l'une des revendications 10 à 12, **caractérisé en ce que** l'unité de contrôle de cordon (9) comprend un capteur qui comprend un tronçon de courbe caractéristique essentiellement linéaire et un tronçon de courbe caractéristique non linéaire, tel que le tronçon de courbe caractéristique essentiellement linéaire se trouve dans une zone du capteur à plus faible sensibilité vis-à-vis de l'éclairage.

14. Appareil selon la revendication 13, **caractérisé en ce que** l'unité de contrôle de cordon (9) comprend un seul capteur, qui est un capteur en technologie CMOS.

15. Appareil selon l'une des revendications 10 à 14, **caractérisé en ce que** l'unité d'évaluation d'images est conçue pour mettre en valeur et pour juger quant aux contours de la région du cordon de soudure dans l'image en valeur de gris.
